(19) Europäisches Patentamt
European Patent Office
Office européen des brevets

(11) **EP 1 843 984 B1**

(12) **EUROPÄISCHE PATENTSCHRIFT**

(45) Veröffentlichungstag und Bekanntmachung des Hinweises auf die Patenterteilung:
**14.06.2017   Patentblatt 2017/24**

(51) Int Cl.:
***C03C 15/00*** *(2006.01)*   ***C03C 19/00*** *(2006.01)*

(21) Anmeldenummer: **06706270.3**

(22) Anmeldetag: **18.01.2006**

(86) Internationale Anmeldenummer:
**PCT/EP2006/000381**

(87) Internationale Veröffentlichungsnummer:
**WO 2006/081940 (10.08.2006 Gazette 2006/32)**

(54) **VERFAHREN ZUR HERSTELLUNG EINES BAUTEILS AUS QUARZGLAS FÜR DEN EINSATZ IN DER HALBLEITERFERTIGUNG UND NACH DEM VERFAHREN ERHALTENES BAUTEIL**

PROCESS FOR PRODUCING A QUARTZ GLASS COMPONENT FOR USE IN SEMICONDUCTOR MANUFACTURE AND COMPONENT PRODUCED BY THIS PROCESS

PROCÉDÉ DE PRODUCTION D'UN COMPOSANT EN VERRE DE SILICE DESTINÉ A ÊTRE UTILISÉ DANS LA FABRICATION DE SEMI-CONDUCTEURS ET COMPOSANT OBTENU PAR CE PROCÉDÉ

(84) Benannte Vertragsstaaten:
**FR GB IE IT NL**

(30) Priorität: **03.02.2005   DE 102005005196**

(43) Veröffentlichungstag der Anmeldung:
**17.10.2007   Patentblatt 2007/42**

(73) Patentinhaber: **Heraeus Quarzglas GmbH & Co. KG**
**63450 Hanau (DE)**

(72) Erfinder:
• **WEBER, Juergen**
**63801 Kleinostheim (DE)**

• **KIRST, Ulrich**
**55116 Mainz (DE)**

(74) Vertreter: **Staudt, Armin Walter**
**Sandeldamm 24a**
**63450 Hanau (DE)**

(56) Entgegenhaltungen:
WO-A-01/19746          US-A- 6 150 006
US-A1- 2003 190 483     US-A1- 2004 238 487
US-A1- 2005 016 958     US-B1- 6 368 410

EP 1 843 984 B1

**Beschreibung**

Die Erfindung betrifft ein Verfahren zur Herstellung eines Bauteils aus Quarzglas für den Einsatz in der Halbleiterfertigung, indem durch mechanische Bearbeitung der Oberfläche eines Quarzglas-Rohlings eine anfängliche mittlere Oberflächenrauigkeit $R_{a,0}$ erzeugt wird, und die so bearbeitete Bauteil-Oberfläche einer Ätzbehandlung unterzogen wird.

Weiterhin betrifft die Erfindung ein nach dem Verfahren erhaltenes Bauteil aus Quarzglas für den Einsatz in der Halbleiterfertigung, das vor seinem erstmaligen bestimmungsgemäßen Einsatz eine durch mechanische Bearbeitung und Ätzen erzeugte Oberfläche mit Ätzstruktur aufweist.

Stand der Technik

Bauteile aus Quarzglas werden in der Halbleiterfertigung in Form von Reaktoren und Apparaturen für die Behandlung von Wafern, Waferträgern, Glocken, Tiegeln, und dergleichen eingesetzt. Bei diesen Anwendungen werden die Quarzglas-Bauteile häufig hohen thermischen Belastungen und chemisch aggressiven Umgebungen ausgesetzt.

Ein besonderes Augenmerk liegt auf der Kontaminationsfreiheit und der von den Bauteilen ausgehenden Partikelbildung. Partikel vermindern die Prozessausbeute und sind daher extrem unerwünscht: Man kann zwischen Partikeln unterscheiden, die sich infolge eines korrosiven Angriffs aus dem Quarzglas-Bauteil lösen, und solchen, bei denen es sich um Bestandteile von Materialschichten handelt, die sich zum Beispiel bei Sputter- oder Aufdampfprozessen auf den Oberflächen der Quarzglas-Bauteile niederschlagen und von dort abfallen.

In dem Zusammenhang spielt die Oberflächenbeschaffenheit der Quarzglas-Bauteile eine wichtige Rolle. Einerseits ist eine gewisse Oberflächenrauigkeit erwünscht, weil auf rauen Oberflächen Materialschichten besser haften, so dass die Wahrscheinlichkeit für ein Lösen von Schichtbestandteilen sowie die Häufigkeit der erforderlichen Reinigungsmaßnahmen - die üblicherweise ein Ätzen in flusssäurehaltiger Lösung umfassen - verringert ist. Daher werden diejenigen Oberflächen, die im Hinblick hierauf Bedeutung haben können, in der Regel durch Schleifen, Polieren oder Sandstrahlen bearbeitet und aufgeraut.

Andererseits werden bei einer mechanischen Bearbeitung der Oberfläche zur Einstellung einer gewünschten Rauigkeit Oberflächendefekte erzeugt, die beim Einsatz des Quarzglas-Bauteils wiederum zu Partikelbildung führen. Um eine möglichst saubere und partikelfreie Oberfläche zu gewährleisten, werden die Quarzglas-Bauteile daher nach der mechanischen Bearbeitung werkseitig oder vom Anwender in einer Ätzlösung kurzzeitig gereinigt. Die Oberfläche der so bearbeiteten Bauteile ist partikelfrei und zeichnet sich durch eine durch die mechanische Endbearbeitung vorgegebene Oberflächenrauigkeit aus, wobei je nach Dauer der Reinigung in Ätzlösung auch eine geringfügige Ätzstruktur erkennbar sein kann.

Die US 6,368, 410 B1 beschreibt ein Verfahren zur Herstellung eines Quarzglas-Bauteils für den Einsatz in der Halbleiterfertigung, indem die Bauteiloberfläche mechanisch aufgeraut und danach geätzt wird. Durch das mechanische Aufrauen wird eine Rauigkeit von 2,5 bis 50 $\mu$m_erhalten. Nach dem Ätzen in einer Ätzlösung mit 49% HF und eine Behandlungsdauer zwischen 0,1h und 5h ergibt sich ein Ätzabtrag von 6 bis 8 $\mu$m. Die endgültige Oberflächenrauigkeit liegt zwischen 0,25 und 5 $\mu$m.

In der US 2004/238487 A1 geht es um die Einstellung einer spezifischen Oberfläche bei einem Quarzglas-Bauteil zum Zweck der Partikelminimierung bei Plasma-Ätzprozessen. Durch Polieren wird eine mittlere Rautiefe $R_a$ im Bereich von 0,125 bis 0,75 $\mu$m eingestellt. Die anschließende Ätzbehandlung wird durch die Rauigkeit der geätzten Oberfläche charakterisiert, wobei ein Bereich von 0,025 bis 2,5 $\mu$m angegeben wird.

Technische Aufgabenstellung

Es hat sich jedoch gezeigt, dass durch diese Maßnahmen die Partikelbildung beim bestimmungsgemäßen Einsatz der Bauteile nicht in ausreichendem Maße verhindert werden kann.

Der Erfindung liegt daher die Aufgabe zugrunde, ein kostengünstiges Verfahren zur Bearbeitung der Oberfläche eines Quarzglas-Bauteils anzugeben, das die reproduzierbare Herstellung von Bauteilen mit geringer Partikelbildung ermöglicht. Außerdem liegt der Erfindung die Aufgabe zugrunde, ein Bauteil anzugeben, das sich bereits bei seinem erstmaligen bestimmungsgemäßen Einsatz in der Halbleiterfertigung durch eine geringe Partikelbildung auszeichnet.

Allgemeine Darstellung der Erfindung

Hinsichtlich des Verfahrens wird diese Aufgabe ausgehend von dem eingangs genannten Verfahren erfindungsgemäß dadurch gelöst, dass durch die mechanische Bearbeitung eine anfängliche mittlere Oberflächenrauigkeit $R_{a,0}$ von mindestens 0,3 $\mu$m und maximal 1,6 $\mu$m eingestellt wird, und dass Intensität und Dauer der Ätzbehandlung so eingestellt werden, dass eine tatsächliche Ätztiefe eingestellt wird, die größer ist als eine in Abhängigkeit von Ra,0

festgelegte Mindest-Ätztiefe (Ätztiefe$_{min}$), die im Bereich zwischen 15 $\mu$m und 120 $\mu$m liegt, und, die bei einer anfänglichen mittleren Oberflächenrauigkeit R$_{a,0}$ von 0,4 $\mu$m oder mehr folgender Bemessungsregel genügt:

$$\text{Ätztiefe}_{min} \text{ [in µm]} = 70 + 60 \times \ln R_{a,0} \text{ [in µm]}.$$

Erfindungsgemäß wird die Oberfläche eines Quarzglas-Rohlings mechanisch bearbeitet und dabei eine anfängliche mittlere Oberflächenrauigkeit R$_{a,0}$ von mindestens 0,3 $\mu$m und maximal 1,6 $\mu$m eingestellt. Wie oben erläutert, ist eine gewisse Rauigkeit zwecks besserer Haftung der beim bestimmungsgemäßen Einsatz auf der Oberfläche des Quarzglas-Bauteils abgeschiedenen Materialschichten erwünscht.

Andererseits hat es sich jedoch gezeigt, dass die Partikelbildung um so größer ist, je größer die anfängliche, durch mechanische Bearbeitung eingestellte Oberflächenrauigkeit ist. Durch einen der mechanischen Bearbeitung nachgeschalteten Reinigungsprozess kann die Partikelbildung verringert werden. Es hat sich aber gezeigt, dass die Standard-Reinigungsbehandlungen für diesen Zweck unzureichend sind. Vielmehr wurde gefunden, dass die Einhaltung eines Mindest-Ätzabtrags erforderlich ist, der größer ist als eine in Abhängigkeit von Ra,0 festgelegte Mindest-Ätztiefe, die im Bereich zwischen 15 $\mu$m und 120 $\mu$m liegt Andererseits wird ein Bauteil mit einer im Hinblick auf die Materialschichten-Haftung noch ausreichend rauen Oberfläche nach einem derartigen nachgeschalteten Ätzprozess jedoch nur dann erhalten, wenn die anfängliche mittlere Oberflächenrauigkeit R$_{a,0}$ vor dem Ätzprozess mindestens 0.3 $\mu$m beträgt.

Erfindungsgemäß wird daher nach der mechanischen Bearbeitung zunächst die anfängliche mittlere Oberflächenrauigkeit R$_{a,0}$ ermittelt - sofern dieser Wert nicht bekannt ist - und es wird sichergestellt, dass R$_{a,0}$ mindestens 0,3 $\mu$m und maximal 1,6 $\mu$m ist. Anschließend wird die Oberfläche des Rohlings bis zu einer Tiefe abgetragen, die größer ist als eine in Abhängigkeit von Ra,0 festgelegte Mindest-Ätztiefe, die im Bereich zwischen 15 $\mu$m und 120 $\mu$m liegt. Auf diese Weise wird ein Quarzglas-Bauteil erhalten, das sich durch eine geringe Partikelbildung auszeichnet.

Die Definition der mittleren Oberflächenrauigkeit R$_a$ ergibt sich aus EN ISO 4287, die Messbedingungen aus EN ISO 4288 oder EN ISO 3274, je nachdem, ob die Oberfläche des Rohlings durch Schleifen oder Sandstrahlen (nicht periodisches Oberflächenprofil) oder durch Drehen (periodisches Oberflächenprofil) endbearbeitet ist.

Bei höheren anfänglichen Oberflächenrauigkeiten (R$_{a,0}$ um 0,4 $\mu$m und mehr) wurde gefunden, dass die Einhaltung eines Mindest-Ätzabtrags erforderlich ist, der von der durch die mechanische Bearbeitung vorgegebenen Oberflächenrauigkeit abhängt.

Daher wird die anfängliche mittlere Oberflächenrauigkeit R$_{a,0}$ ermittelt, und die tatsächliche Ätztiefe größer eingestellt als eine in Abhängigkeit von R$_{a,0}$ festgelegte Mindest-Ätztiefe Ätztiefe$_{min}$.

Auf Basis des ermittelten oder bekannten R$_{a,0}$-Wertes wird ein spezifischer Mindest-Ätzabtrag bestimmt und der Rohling dementsprechend lange und intensiv geätzt. Der für den R$_{a,0}$-Wert spezifische Mindest-Ätzabtrag ergibt sich anhand weniger Ätzversuche als die diejenige Abtragtiefe, ab der sich beim weiteren Ätzen des Rohlings eine konstante Ätzrate [mm/min] oder eine im Wesentlichen zeitlich konstante Gewichtsabnahme einstellt. Dieser Mindest-Ätzabtrag liegt im Bereich zwischen 15 $\mu$m und 120 $\mu$m.

Im Hinblick hierauf hat sich ab einer anfänglichen mittleren Oberflächenrauigkeit R$_{a,0}$ von 0,4 $\mu$m oder mehr eine Verfahrensweise als besonders vorteilhaft erwiesen, bei der, die Ätztiefe$_{min}$ folgender Bemessungsregel genügt:

$$\text{Ätztiefe}_{min} = 70 + 60 \times \ln R_{a,0} \text{ [in µm],}$$

vorzugsweise folgender Bemessungsregel:

$$\text{Ätztiefe}_{min} = 75 + 60 \times \ln R_{a,0} \text{ [in µm].}$$

Diese Bemessungsregel erlaubt bei Kenntnis der anfänglichen mittleren Oberflächenrauigkeit R$_{a,0}$ des Rohlings eine einfache Ermittlung desjenigen Ätzabtrags, der ausreicht, um ein Quarzglas-Bauteil zu erhalten, das sich durch eine geringe Partikelgenerierung beim bestimmungsgemäßen Einsatz und gleichzeitig durch eine im Hinblick auf die Haftung abgeschiedener Materialschichten ausreichend hohe Oberflächenrauigkeit auszeichnet.

Es hat sich gezeigt, dass insbesondere bei geschliffenen Quarzglas-Oberflächen mit einer anfänglichen mittleren Oberflächenrauigkeit R$_{a,0}$ von 0,4 $\mu$m oder mehr, der Mindest-Abtrag Ätztiefe$_{min}$ in der Regel im Bereich zwischen 20 $\mu$m und 100 $\mu$m liegt.

Um mit der Ätzbehandlung einhergehenden Zeitaufwand und Materialverlust zu minimieren, wird der Ätzabtrag (nach der mechanischen Bearbeitung) so gering wie möglich gehalten. Daher wird eine Verfahrensweise bevorzugt, bei der Intensität und Dauer der Ätzbehandlung so eingestellt werden, dass die tatsächliche Ätztiefe um höchstens 20 $\mu$m

größer ist als die Ätztiefe$_{min}$.

Weiterhin hat es sich bewährt, wenn durch die mechanische Bearbeitung der Oberfläche eine anfängliche mittlere Oberflächenrauigkeit R$_{a,0}$ um 0,8 $\mu$m erzeugt wird.

Aus Quarzglas-Rohlingen mit anfänglichen mittleren Oberflächenrauigkeiten in dem angegebenen Bereich werden nach einem Ätzabtrag von mindestens 10 $\mu$m bzw. in der Größe des jeweils spezifischen Mindest-Ätzabtrags Ätztiefe$_{min}$ Quarzglas-Bauteile erhalten, die eine im Hinblick auf die Haftung abgeschiedener Materialschichten ausreichend hohe Oberflächenrauigkeit aufweisen.

In dem Zusammenhang hat es sich auch als besonders vorteilhaft erwiesen, wenn die Ätzbehandlung eine Ätzstruktur erzeugt, die eine tatsächliche mittlere Oberflächenrauigkeit R$_{a,1}$ aufweist, die im Bereich von 0,4 $\mu$m bis 7 $\mu$m höher ist als die anfängliche mittlere Oberflächenrauigkeit R$_{a,0}$.

Hinsichtlich des Bauteils aus Quarzglas für den Einsatz in der Halbleiterfertigung wird die oben angegebene Aufgabe erfindungsgemäß dadurch gelöst, dass das Bauteil nach dem erfindungsgemäßen Verfahren erhältlich ist und eine Oberfläche aufweist, die gekennzeichnet ist durch

a) eine mittlere Oberflächenrauigkeit R$_{a,1}$ im Bereich zwischen 0,6 $\mu$m und 8 $\mu$m, und

b) eine im Wesentlichen zeitlich konstante Gewichtsabnahme von weniger als 0,4 $\mu$g / (mm$^2$ x min) beim Ätzen in 10%-iger Flusssäure bei Raumtemperatur.

Vor dem ersten bestimmungsgemäßen Einsatz in der Halbleiterfertigung weist die Oberfläche des erfindungsgemäßen Quarzglas-Bauteils eine Ätzstruktur auf, die im Wesentlichen durch zwei Eigenschaften charakterisiert ist. Zum einen durch eine mittlere Oberflächenrauigkeit im Bereich zwischen 0,6 $\mu$m und 8 $\mu$m. Zum anderen durch eine von Anfang an vorhandene weitgehende Konstanz des Ätzverhaltens gegenüber nachfolgenden Ätzbehandlungen.

Die mittlere Oberflächenrauigkeit im Bereich zwischen 0,6 $\mu$m und 8 $\mu$m gewährleistet eine ausreichende Haftung von auf der Oberfläche abgeschiedenen Materialschichten.

Die Konstanz des Ätzverhaltens zeigt sich zum einen darin, dass sich vom ersten bestimmungsgemäßen Einsatz des Bauteils an durch weiteres Ätzen des Bauteils in 10%-iger Flusssäure eine im Wesentlichen zeitlich konstante Gewichtsabnahme ergibt, und zum anderen darin, dass die Gewichtsabnahme mit weniger als 0,4 $\mu$g / (mm$^2$ x min) sehr gering ist. Die gemessene Gewichtsabnahme hängt von der Größe der Oberfläche des Quarzglas-Bauteils ab, die während des Ätzprozesses laufend abnimmt. Dieser Effekt wird durch die Normierung auf die jeweilige Oberflächengröße eliminiert. Unter eine im Wesentlichen zeitlich konstante Gewichtsabnahme wird ein auf [mm$^2$ x min] normierte Gewichtsabnahme [$\mu$g] verstanden, die von einem Mittelwert (arithmetisches Mittel) um maximal 0,05 $\mu$g abweicht.

Es hat sich gezeigt, dass mit einer variablen Ätzrate eines Quarzglas-Bauteils eine deutliche Partikelgenerierung einhergeht, wohingegen sich eine zeitlich konstante Gewichtsabnahme als obligatorisch für eine geringe Partikelgenerierung des Quarzglas-Bauteils erwiesen hat. Somit kennzeichnet dieses Merkmal gleichzeitig die Eignung des erfindungsgemäßen Bauteils zum Einsatz bei der Halbleiterfertigung im Hinblick auf die Partikelgenerierung.

Eine zeitlich konstante Gewichtsabnahme (normiert auf die jeweilige Oberfläche) trägt außerdem zu einer gewissen Beibehaltung der mittleren Oberflächenrauigkeit und somit auch zur Beibehaltung der Hafteigenschaften des Quarzglas-Bauteils auch nach mehrmaligen Reinigungen in flusssäurehaltiger Lösung bei - jedenfalls wurde dies bei anfänglichen mittleren Rauigkeiten R$_a$ von 0,8 $\mu$m oder weniger gefunden.

Das erfindungsgemäße Bauteil kann anhand des oben beschriebenen Verfahrens erhalten werden, insbesondere durch mechanische Bearbeitung unter Einhaltung einer anfänglichen mittleren Oberflächenrauigkeit R$_{a,0}$ von mindestens 0,2 $\mu$m, und einer anschließenden Ätzbehandlung, mit einem für den R$_{a,0}$-Wert spezifischen Mindest-Ätzabtrag.

Eine weitere Verbesserung des erfindungsgemäßen Bauteils in Bezug auf eine geringe Partikelgenerierung ergibt sich, wenn sich beim Ätzen unter den oben genannten Bedingungen eine im Wesentlichen zeitlich konstante Gewichtsabnahme von weniger als 0,25 $\mu$g / (mm$^2$ x min) einstellt.

Es hat sich gezeigt, dass die Ätzstruktur bei einem derartigen Bauteil frei von Mikrorissen ist.

Als besonders vorteilhaft hat sich ein Einsatz des erfindungsgemäßen Bauteils in Form eines Flansches für eine Single-Wafer-Behandlungsvorrichtung erwiesen.

Die Single-Wafer-Behandlungsvorrichtung befindet sich in unmittelbarer Nachbarschaft zu dem zu behandelnden Wafer, oder dieser liegt auf der Single-Wafer-Behandlungsvorrichtung unmittelbar auf, so dass eine Partikelgenerierung durch diese Vorrichtung besonders problematisch ist.

Ausführungsbeispiel

Nachfolgend wird die Erfindung anhand eines Ausführungsbeispiels und einer Patentzeichnung näher beschrieben. Es zeigen im Einzelnen:

**Figur 1**     ein Diagramm zum zeitlichen Ätzabtrag bei Quarzglas-Rohlingen mit mechanisch unterschiedlich vorbehandelten Oberflächen, und

**Figur 2**     ein Balkendiagramm zur Entwicklung der Oberflächenrauigkeit mit der Ätzdauer bei Quarzglas-Rohlingen mit mechanisch unterschiedlich vorbehandelten Oberflächen.

Es werden zylinderförmige Quarzglas-Rohlinge aus natürlich vorkommenden Quarzrohstoffen hergestellt und die planen Oberflächen mittels eines Schleifgerätes, das zuletzt mit einer D46 Schleifscheibe (nach FEPA-Standard) bestückt ist, grob auf das vorgegebene Endmaß geschliffen. Die Endbearbeitung der planen Oberfläche erfolgt unter Einsatz einer CNC-Schleifmaschine in einem mehrstufigen Beabeitungsprozess, bei dem der Schleifgrad fortlaufend verfeinert wird. Auf diese Weise werden Bauteile mit vier unterschiedlichen Oberflächen- Qualitäten erhalten - jeweils charakterisiert durch ihre anfängliche mittlere Rautiefe $R_{a,0}$. Diese sind in Tabelle 1 zusammengefasst.

**Tabelle 1**

| Probe | Anfängliche mittlere Rautiefe $R_{a,0}$ [μm] | Ätzdauer$_{min}$ [min] | Ätztiefe$_{min}$ [μm] | Max. Rautiefe nach Ätzdauer$_{min}$ [μm] |
|---|---|---|---|---|
| 1 | 0,4 | 300 | 15 | 1,0 |
| 2 | 0,8 | 1200 | 60 | 4,4 |
| 3 | 1,2 | 1600 | 80 | 6,0 |
| 4 | 1,5 | ~2000 | ~100 | 6,5 |

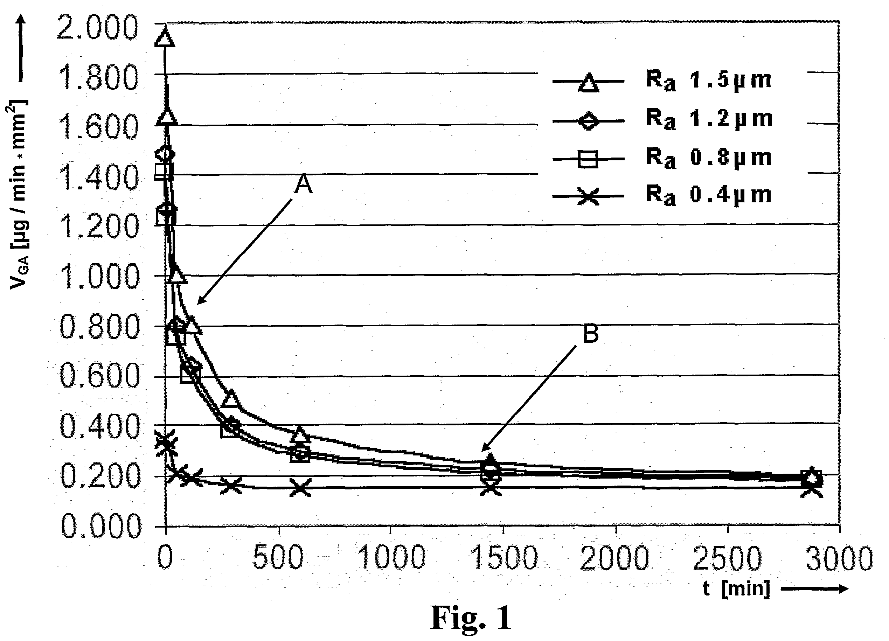

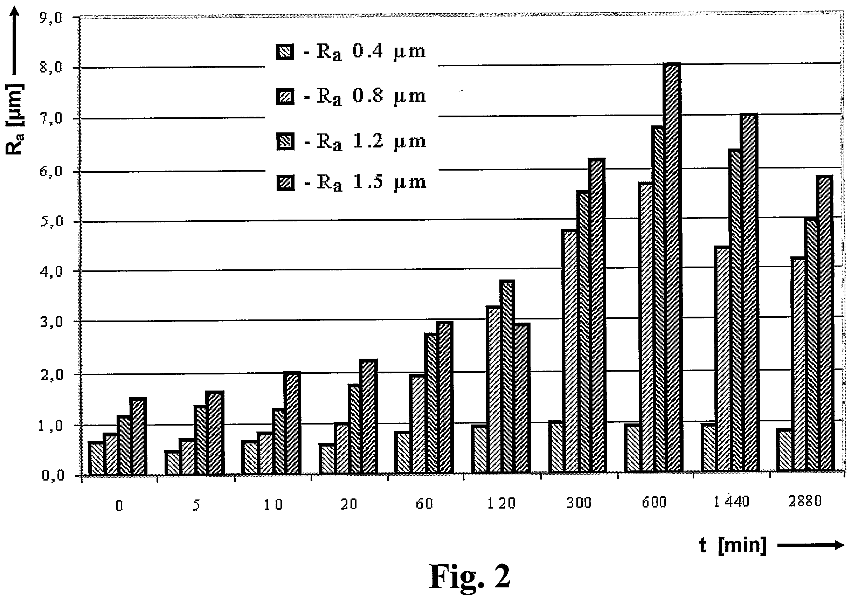

Die so erhaltenen Quarzglas-Proben werden anschließend in einer Flusssäure-Ätzlösung geätzt, in der sich bei Raumtemperatur bei eine Ätzrate von etwa 0,05 μm/min einstellt (bei fehlerfreier Oberfläche).
Bei der Ätzlösung handelt es sich um eine 10%-ige HF-Lösung (in destilliertem Wasser).
Proben mit den unterschiedlichen Oberflächen-Qualitäten werden in dieser Ätzlösung jeweils Ätzdauern im Bereich zwischen 5 Minuten und 2880 Minuten (48 Stunden) unterzogen. Die dabei abgetragenen Schichtdicken liegen somit im Bereich zwischen 0,125 μm und 144 μm. Bei diesen Versuchsreihen zeigt sich, dass alle Proben-Qualitäten zunächst eine höhere Ätzrate aufweisen, die nach einer gewissen Ätzdauer in eine im Wesentlichen konstante Ätzrate übergeht.
Den entsprechenden zeitlichen Verlauf der Ätzrate für die vier Proben-Qualitäten zeigt das Diagramm in **Figur 1**. Dort ist auf der γ-Achse die zeitliche Gewichtsabnahme $V_{GA}$ bezogen auf die aktuelle Oberfläche des Bauteils aufgetragen [μg / min x mm$^2$], und auf der x-Achse die Ätzdauer t in [min]. Alle Proben zeigen eine anfänglich ungefähr exponentielle Gewichtsabnahme (Bereich A), die nach weiterem Ätzen in einen linearen Verlauf übergeht (Bereich B). Es ist deutlich zu erkennen, dass bei den Proben mit der anfänglich geringsten mittleren Rautiefe der Übergang zur linearen Gewichtsabnahme deutlich früher liegt als bei den Proben mit der höheren mittleren Rauhtiefe. Die ungefähren Ätzdauern bis zum Beginn des linearen Verlaufs sind für die jeweiligen Oberflächen-Qualitäten in Spalte 3 unter "Ätzdauer$_{min}$" eingetragen. In Spalte 4 finden sich die in "Ätztiefen" umgerechneten Werte.
Es hat sich gezeigt, dass Quarzglas-Bauteil aller getesteten Oberflächen-Qualitäten eine sehr geringe Partikelgenerierung beim bestimmungsgemäßen Einsatz aufweisen, unter der Voraussetzung, dass sie nach ihrer mechanischen Endbearbeitung eine Ätzbehandlung erfahren haben, bei der mindestens ein Abtrag gemäß der in Tabelle 1 genannten "Ätztiefe$_{min}$" erfolgt. Bei geringeren Ätztiefen (kürzeren Ätzbehandlungen bei gegebener Ätzrate) ist noch eine Partikelgenerierung beim Einsatz der entsprechenden Bauteile zu beobachten.
Unter Kostengesichtspunkten führt dieses Resultat zunächst zum Schluss, dass eine anfänglich glattere Oberfläche zu bevorzugen ist, weil sie in deutlich kürzerer Ätzdauer zu einem Quarzglas-Bauteil mit geringer Partikelgenerierung führt. Jedoch sind hierbei zwei andere Aspekte zu beachten. Zum einen erfordert die Herstellung einer anfänglich glatteren Oberfläche einen deutlich höheren Schleif- und Polieraufwand. Zum anderen zeigen die Proben mit anfänglich glatterer Oberfläche nach einem Ätzprozess mit einer Dauer von mindestens "Ätzdauer$_{min}$" eine Oberflächenrauigkeit, die geringer ist als die Oberflächenrauigkeit von Proben mit anfänglich gröberer Oberfläche, wie im Folgenden anhand des Balkendiagramms von **Figur 2** näher erläutert wird.
Figur 2 zeigt die Veränderung der mittleren Oberflächenrauigkeit $R_a$ nach unterschiedlichen Ätzdauern [in Minuten] bei den verschiedenen Oberflächen-Qualitäten. Daraus ist ersichtlich, dass bei allen Proben die mittlere Oberflächenrauigkeit $R_a$ im Verlauf des Ätzprozesses zunächst zunimmt und danach wieder abnimmt. Zunahme und Maximum der Oberflächenrauigkeit sind bei den Proben mit anfänglich rauer Oberfläche wesentlich ausgeprägter als bei der Probe mit der anfänglich glattesten Oberfläche (Probe 1). Bei dieser Probe stellt sich während des gesamten Ätzversuches ein Maximum der mittleren Oberflächenrauigkeit bei etwa $R_a$ = 1,0 μm ein. Die drei anderen Proben zeigen Rauigkeits-Maxima, die um den Faktor 6 bis 7 über dem jeweiligen anfänglichen Wert liegen. Auch die Rauigkeitswerte nach einer Ätzdauer entsprechend den probenspezifischen "Ätzdauern$_{min}$" liegen bei diesen Proben noch um den Faktor 4 bis 5 über dem jeweiligen anfänglichen Wert. Die probenspezifischen maximalen $R_a$-Werte nach einer Ätzdauer von "Ätzdauer$_{min}$" finden sich in Spalte 5 von Tabelle 1.

Für Anwendungen, bei denen es auch auf eine gute Haftung abgeschiedener Materialschichten ankommt, sind hohe Oberflächenrauigkeiten besser geeignet. Insoweit ist die Probe 2 mit einer anfänglichen mittleren Rautiefe Ra=0,8 μm zu bevorzugen, die sich einerseits durch einen vertretbar kleinen Wert für "Ätzdauer$_{min}$" auszeichnet (1200 min) und die andererseits nach dieser Ätzdauer noch eine ausreichend hohe Oberflächenrauigkeit mit einem $R_a$-Wert oberhalb von 4 μm aufweist.

Auf Basis der in Tabelle 1 genannten Daten kann die erforderliche Intensität und Dauer einer Ätzbehandlung anhand folgender Bemessungsregel abgeschätzt werden: Ätztiefe$_{min}$ [in μm] = 70 + 60 x ln $R_{a,0}$ [in μm].

Unter Berücksichtigung eines Sicherheitsfaktors sollte in der Praxis die tatsächliche Ätztiefe um mindestens 5 μm tiefer als die Mindest- Ätztiefe$_{min}$ ausfallen, aus Kostengründen jedoch um höchstens 20 μm.

Beispiel

Unter Einsatz des erfindungsgemäßen Verfahrens wird ein Single-Wafer-Halter aus Quarzglas hergestellt. Dieses Bauteil hat im wesentlichen Ringform. Alle Oberflächen - also die beiden Flachseiten und die Zylinderflächen - eines entsprechenden Quarzglas-Rohlings werden wie oben erläutert geschliffen, bis sich eine mittlere Oberflächenrauigkeit von 0,8 μm ergibt.

Der so bearbeitete Rohling wird anschließend 1440 Minuten lang in 10%-iger HF-Lösung behandelt. Das so erhaltene Bauteil zeigt eine Ätzstruktur mit einer mittleren Oberflächenrauigkeit $R_a$ um 4,3 μm, die vollkommen frei von Mikrorissen ist.

Das Bauteil zeichnet sich durch eine geringe Partikelgenerierung beim bestimmungsgemäßen Einsatz und durch hohes Haftvermögen für darauf abgeschiedene Materialschichten aus.

Ein charakteristisches Merkmal des so hergestellten Quarzglas-Halters zeigt sich bei weiterem Ätzen in 10%-iger Flusssäure in einem weitgehend konstanten Ätzverhalten. Dies spiegelt sich vorallem in einer geringen Gewichtsabnahme von etwa 0,2 μg / (mm$^2$ x min) wider. Die Gewichtsabnahme ist zudem zeitlich konstant, wie auch Figur 1 zeigt. Bei einem weiteren Ätzprozess mit einer Ätzdauer von 1440 Minuten (und damit auf eine Gesamt-Ätzdauer von 2880 Minuten) stellt sich ein Gewichtsabnahme von etwa 0,19 μg / (mm$^2$ x min) ein.

Außerdem bleibt die mittlere Oberflächenrauigkeit auch nach diesem weiteren Ätzprozess von 1440 Minuten auf relativ hohem Niveau von etwa 4,1 μm (wie Figur 2 zeigt).

Vergleichsbeispiel

Es wird ein Single-Wafer-Halter aus Quarzglas hergestellt und mechanisch bearbeitet, wie in Beispiel 1 beschrieben. Die mittlere Oberflächenrauigkeit beträgt 0,8 μm. Der so bearbeitete Rohling wird anschließend 20 Minuten lang in 10%-iger HF-Lösung gereinigt.

Das so erhaltene Bauteil weist eine Ätzstruktur mit einer mittleren Oberflächenrauigkeit $R_a$ um 1 μm auf. Beim bestimmungsgemäßen Einsatz in einem Halbleiterfertigungsprozess zeigt sich eine deutliche Partikelgenerierung.

Eine Überprüfung des Ätzverhaltens des Halters zeigt, dass das Quarzglas beim Ätzen in 10%-iger HF-Lösung eine anfänglich hohe Gewichtsabnahme von etwa 1 μg / (mm$^2$ x min) zeigt, der bei weiterem Ätzen jedoch rasch abnimmt.

**Patentansprüche**

**1.** Verfahren zur Herstellung eines Bauteils aus Quarzglas für den Einsatz in der Halbleiterfertigung, indem durch mechanische Bearbeitung der Oberfläche eines Quarzglas-Rohlings eine anfängliche mittlere Oberflächenrauigkeit $R_{a,0}$ erzeugt wird, und die so bearbeitete Bauteil-Oberfläche einer Ätzbehandlung unterzogen wird, **dadurch gekennzeichnet, dass** durch die mechanische Bearbeitung eine anfängliche mittlere Oberflächenrauigkeit $R_{a,0}$ von mindestens 0,3 μm und maximal 1,6 μm eingestellt wird, und dass Intensität und Dauer der Ätzbehandlung so eingestellt werden, dass eine tatsächliche Ätztiefe eingestellt wird, die größer ist als eine in Abhängigkeit von $R_{a,0}$ festgelegte Mindest-Ätztiefe (Ätztiefe$_{min}$), die im Bereich zwischen 15 μm und 120 μm liegt, und die bei einer anfänglichen mittleren Oberflächenrauigkeit $R_{a,0}$ von 0,4 μm oder mehr folgender Bemessungsregel genügt:

$$\text{Ätztiefe}_{min}\ [\text{in μm}] \quad = \quad 70 + 60 \text{ x ln } R_{a,0}\ [\text{in μm}]$$

**2.** Verfahren nach Anspruch 1, **dadurch gekennzeichnet, dass** die Ätztiefe$_{min}$ folgender Bemessungsregel genügt:

$$\text{Ätztiefe}_{min} \text{ [in µm]} \quad = \quad 75 + 60 \times \ln R_{a,0} \text{ [in µm]}$$

**3.** Verfahren nach einem der Ansprüche 1 bis 2, **dadurch gekennzeichnet, dass** Ätztiefe$_{min}$ im Bereich zwischen 20 µm und 100 µm liegt.

**4.** Verfahren nach einem der Ansprüche 1 bis 3, **dadurch gekennzeichnet, dass** Intensität und Dauer der Ätzbehandlung so eingestellt werden, dass die tatsächliche Ätztiefe um höchstens 20 µm größer ist als Ätztiefe$_{min}$.

**5.** Verfahren nach einem der vorhergehenden Ansprüche, **dadurch gekennzeichnet, dass** durch die mechanische Bearbeitung der Oberfläche eine anfängliche mittlere Oberflächenrauigkeit $R_{a,0}$ um 0,8 µm erzeugt wird.

**6.** Verfahren nach einem der vorhergehenden Ansprüche, **dadurch gekennzeichnet, dass** die Ätzbehandlung eine Ätzstruktur erzeugt, die eine tatsächliche mittlere Oberflächenrauigkeit $R_{a,1}$ aufweist, die im Bereich von 0,4 µm bis 7 µm höher ist als die anfängliche mittlere Oberflächenrauigkeit $R_{a,0}$.

**7.** Bauteil aus Quarzglas für den Einsatz in der Halbleiterfertigung, erhältlich nach einem Verfahren gemäß den Ansprüchen 1 bis 6, das vor seinem erstmaligen bestimmungsgemäßen Einsatz eine durch mechanische Bearbeitung und Ätzen erzeugte Oberfläche mit Ätzstruktur aufweist, die **gekennzeichnet ist durch**

    a) eine mittlere Oberflächenrauigkeit $R_{a,1}$ im Bereich zwischen 0,6 µm und 8 µm, und
    b) eine im Wesentlichen zeitlich konstante Gewichtsabnahme von weniger als 0,4 µg / (mm$^2$ x min) beim Ätzen in 10%-iger Flusssäure bei Raumtemperatur.

**8.** Bauteil nach Anspruch 7, **dadurch gekennzeichnet, dass** sich eine im Wesentlichen zeitlich konstante Gewichtsabnahme von weniger als 0,25 µg / (mm$^2$ x min) einstellt.

**9.** Bauteil nach Aspruch 7 oder 8, **dadurch gekennzeichnet, dass** die Ätzstruktur frei von Mikrorissen ist.

**10.** Bauteil nach einem der vorhergehenden Ansprüche 7 bis 9, **dadurch gekennzeichnet, dass** es in Form eines Flansches für eine Single-Wafer-Behandlungsvorrichtung ausgebildet ist.

**Claims**

**1.** A process for producing a quartz glass component for use in semiconductor manufacture in that an initial average surface roughness $R_{a,0}$ is produced by mechanically machining the surface of a quartz glass blank, and the component surface machined in this way is subjected to an etching treatment, **characterized in that** an initial average surface roughness $R_{a,0}$ of at least 0.3 µm and not more than 1.6 µm is set by the mechanical machining, and that the etching treatment is of an intensity and duration such that an actual etching depth is obtained which is higher than a minimum etching depth$_{min}$ defined with respect to $R_{a,0}$, said minimum etching depth$_{min}$ is in the range between 15 µm and 120 µm, and at an initial average surface roughness $R_{a,0}$ of 0.4 µm or more, it satisfies the following dimensioning rule:

$$\text{etching depth}_{min} \text{ [in µm]} = 70 + 60 \times \ln R_{a,0} \text{ [in µm]}$$

**2.** The process according to claim 1, **characterized in that** the etching depth$_{min}$ satisfies the following dimensioning rule:

$$\text{etching depth}_{min} \text{ [in µm]} = 75 + 60 \times \ln R_{a,0} \text{ [in µm]}$$

**3.** The process according to any one of claims 1 to 2, **characterized in that** etching depth$_{min}$ is in between 20 µm and 100 µm.

4. The process according to any one of claims 1 to 3, **characterized in that** intensity and duration of the etching treatment are set such that the actual etching depth is by not more than 20 $\mu$m greater than etching depth$_{min}$.

5. The process according to any one of the preceding claims, **characterized in that** an initial average surface roughness $R_{a,0}$ of around 0.8 $\mu$m is produced by mechanically machining the surface.

6. The process according to any one of the preceding claims, **characterized in that** the etching treatment produces an etched structure which has an actual average surface roughness $R_{a,1}$ which in the range of 0.4 $\mu$m to 7 $\mu$m is higher than the initial average surface roughness $R_{a,0}$.

7. A quartz glass component for use in semiconductor manufacture obtainable by a method according to the claims 1 to 6, which before its first intended use comprises a surface produced by mechanical machining and etching having an etched structure which is **characterized by**

   a) an average surface roughness $R_{a,1}$ in the range between 0.6 $\mu$m and 8 $\mu$m, and
   b) a weight loss substantially constant in time of less than 0.4 $\mu$g / (mm$^2$ x min) when etched in 10% hydrofluoric acid at room temperature.

8. The component according to claim 7, **characterized in that** a weight loss substantially constant in time of less than 0.25 $\mu$g / (mm$^2$ x min) is set.

9. The component according to claim 7 or 8, **characterized in that** the etched structure is free from microcracks.

10. The component according to any one of the preceding claims 7 to 9, **characterized in that** it is shaped in the form of a flange for a single-wafer treatment device.


**Revendications**

1. Procédé de fabrication d'un composant en verre de quartz pour l'utilisation dans la fabrication de semi-conducteurs en générant, par traitement mécanique de la surface d'une ébauche en verre de quartz, une rugosité de surface $R_{a,0}$ moyenne initiale et en soumettant la surface du composant ainsi traitée à un traitement par gravure, **caractérisé en ce que** par le traitement mécanique, une rugosité de surface $R_{a,0}$ moyenne initiale d'au moins 0,3 $\mu$m et de maximum 1,6 $\mu$m est réglée, et **en ce que** l'intensité et la durée du traitement par gravure sont réglées de manière à ce qu'une profondeur de gravure effective soit réglée, laquelle est supérieure à une profondeur de gravure minimale (profondeur de gravure$_{min}$) déterminée en fonction de $R_{a,0}$, laquelle est située dans la plage comprise entre 15 $\mu$m et 120 $\mu$m, et laquelle, avec une rugosité de surface $R_{a,0}$ moyenne initiale de 0,4 $\mu$m ou plus, satisfait à la règle de calcul suivante:

$$\text{Profondeur de gravure}_{min} \text{ [en µm]} = 70 + 60 \times \ln R_{a,0} \text{ [en µm]}$$

2. Procédé selon la revendication 1, **caractérisé en ce que** la profondeur de gravure$_{min}$ satisfait à la règle de calcul suivante :

$$\text{Profondeur de gravure}_{min} \text{ [en µm]} = 75 + 60 \times \ln R_{a,0} \text{ [en µm]}$$

3. Procédé selon l'une quelconque des revendications 1 à 2, **caractérisé en ce que** la profondeur de gravure$_{min}$ est située dans la plage comprise entre 20 $\mu$m et 100 $\mu$m.

4. Procédé selon l'une quelconque des revendications 1 à 3, **caractérisé en ce que** l'intensité et la durée du traitement de gravure sont réglées de manière à ce que la profondeur de gravure effective soit au maximum de 20 $\mu$m supérieure à la profondeur de gravure$_{min}$.

5. Procédé selon l'une quelconque des revendications précédentes, **caractérisé en ce que** par le traitement mécanique de la surface, une rugosité de surface $R_{a,0}$ moyenne initiale de 0,8 $\mu$m est produite.

**6.** Procédé selon l'une quelconque des revendications précédentes, **caractérisé en ce que** le traitement de gravure génère une structure de gravure qui présente une rugosité de surface $R_{a,1}$ moyenne effective laquelle est supérieure dans la plage de 0,4 $\mu$m à 7 $\mu$m à la rugosité de surface $R_{a,0}$ moyenne initiale.

**7.** Composant en verre de quartz pour l'utilisation dans la fabrication de semi-conducteurs, obtenu selon un procédé selon les revendications 1 à 6, lequel, avant sa première utilisation conforme à l'emploi prévu, présente une surface générée par traitement mécanique et par gravure, avec structure de gravure, qui est **caractérisée par**

a) une rugosité de surface $R_{a,1}$ moyenne située dans la plage comprise entre 0,6 $\mu$m et 8 $\mu$m, et
b) une perte de poids essentiellement constante dans le temps de moins de 0,4 $\mu$g / (mm$^2$ x min) lors de la gravure dans de l'acide fluorhydrique à 10% à température ambiante.

**8.** Composant selon la revendication 7,**caractérisé en ce qu'**une perte de poids essentiellement constante dans le temps de moins de 0,25 $\mu$g / (mm$^2$ x min) se règle.

**9.** Composant selon la revendication 7 ou 8, **caractérisé en ce que** la structure de gravure est exempte de microfissures.

**10.** Composant selon l'une quelconque des revendications précédentes 7 à 9, **caractérisé en ce qu'**il est réalisé sous forme d'une bride pour un dispositif de traitement single wafer.

Fig. 1

EP 1 843 984 B1

**Fig. 2**

**EP 1 843 984 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6368410 B1
- US 2004238487 A1